# EUROPÄISCHE PATENTSCHRIFT

(11) **EP 1 282 298 B1**
(45) Veröffentlichungstag und Bekanntmachung des Hinweises auf die Patenterteilung: **04.03.2015**
(21) Anmeldenummer: 02016387.9
(22) Anmeldetag: 26.07.2002
(51) Int. Cl.: H04M 11/00, G08C 17/02

(54) **Kommunikationseinrichtung für Fahrzeuge**
Communication device for vehicles
Appareil de communication pour véhicules

(30) Priorität: 30.07.2001 DE 10137149
(43) Veröffentlichungstag der Anmeldung: 05.02.2003
(73) Patentinhaber: KNORR-BREMSE Systeme für Nutzfahrzeuge GmbH, 80809 München (DE)
(72) Erfinder: Miller, Bernhard, 71263 Weil der Stadt (DE)

(56) Entgegenhaltungen:
- US-A- 5 113 427

## Beschreibung

Die vorliegende Erfindung betrifft eine Kommunikationseinrichtung für Fahrzeuge gemäß dem Oberbegriff des Patentanspruches 1.

Eine derartige Kommunikationseinrichtung ist aus der älteren, nicht vor veröffentlichten EP 1 172 237 A2 bekannt. Dort ist zur Überwachung des Luftdruckes von Fahrzeugreifen im Fahrzeug eine Sende-/ Empfangseinrichtung angeordnet, die über eine unmittelbare Funkverbindung Daten mit einem Mobiltelefon austauschen kann. Die Funkverbindung ist hierbei eine Bluetooth-Verbindung. Auf ein Anforderungssignal des Mobiltelefons fragt eine Steuereinheit in Form einer CPU mehrere Luftdrucksensoren ab und sendet nach Aufbereitung deren Daten an das Mobiltelefon.

Die US 5,113,427 A zeit eine Kommunikationseinrichtung für Kraftfahrzeuge. In einem Kraftfahrzeug ist eine Sende-/Empfangseinheit angeordnet, die mit einem Steuergerät des Kraftfahrzeuges verbunden ist und von Sensoren erfaßte Zustandsgrößen aussenden und Steuerbefehle empfangen kann, die vom Steuergerät an vorbestimmte Aktuatoren geleitet werden. Die Sende-/Empfangseinheit steht über ein Funktelefonnetz mit einem Telefon in Verbindung zum bidirektionalen Datenaustausch. Obwohl dort nicht ausdrücklich erwähnt, ist denkbar, daß das letztgenannte Telefon seinerseits ein Funk- bzw. Mobiltelefon ist, das über das genannte Telefonnetz eine Kommunikationsverbindung mit der Sende-/Empfangseinheit des Kraftfahrzeuges aufnehmen kann.

Die öffentlich verfügbaren Funktelefonnetze haben jedoch keine vollständige Gebietsabdeckung, so daß in bestimmten Gegenden wie z.B. Gebirgstälern, Tunnels und ähnlichem keine Kommunikationsverbindung aufgebaut werden kann.

Aus "Auto Motor Sport", Heft 6 vom 07.03.2001 ist eine Kommunikationseinrichtung bekannt, bei der über einen in einem Autoreifen integrierten Mikrochip der Reifenluftdruck und die Temperatur des Reifens per Funk an ein Mobiltelefon übertragen werden. Bei einer anomalen Veränderung des Reifenluftdruckes bzw. der Reifentemperatur erzeugt das Mobiltelefon ein akustisches und/oder optisches Warnsignal.

Aus der Druckschrift DE 198 23 122 A ist eine Kommunikationseinrichtung gemäß dem Oberbegriff des Anspruchs 1 bekannt.

Aus anmelderinternem Stand der Technik sind Nutzfahrzeuge bekannt, die mit einer elektronischen Luftfederung ausgestattet sind, welche eine Niveauverstellung des Fahrzeugaufbaus ermöglicht, beispielsweise für Außenarbeiten, zur Be- und Entladung sowie zum An- und Abkuppeln eines Anhängers. Für die Ansteuerung der Niveauverstellungseinrichtung ist dort ein Handgerät vorgesehen, das über ein Spiralkabel mit dem Fahrzeug verbunden ist. Bei Nutzfahrzeugen, bei denen im Zugfahrzeug oder im Anhängerfahrzeug eine elektronische Luftfederung mit Höhenverstellung installiert ist, ist bekannt, diese durch eine zweite Fernbedienung bzw. alternativ dazu durch Umstecken der Fernbedienung des Zugfahrzeuges an das Anhängerfahrzeug zu bedienen. Bei Nutzfahrzeuganhängern, welche häufig an unterschiedliche Zugfahrzeuge angekoppelt werden, ist es erforderlich, die gefahrenen Kilometer des Anhängers sowie eventuelle Fehlermeldungen anzuzeigen. Dazu sind am Anhängerfahrzeug spezielle Kilometerstandszähler bzw. Störungsanzeigeeinrichtungen vorgesehen.

Aus anmelderinternem Stand der Technik sind ferner "drahtgebundene Fernbedienungen" bekannt, bei denen Daten über eine separate oder gemeinsame Sende-/Empfangsleitung übertragen werden. Die Meldung von Fehlern eines Steuergerätes erfolgt entweder am Amaturenbrett des Fahrzeuges oder mittels einer optischen Anzeige, z.B. einer LED, die in der Fernbedienung vorhanden ist. Bei Verwendung eines "intelligenten" Amaturenfeldes wird die Fehlerausgabe mittels Text- oder Grafikanzeige im Klartext dem Fahrer mitgeteilt. Des weiteren ist bekannt, mittels eines Diagnosegerätes, das an einen Diagnosestecker des Fahrzeuges angeschlossen wird, in der Werkstatt eine detaillierte Fehlerdiagnose verschiedener Steuergeräte des Fahrzeuges auszugeben.

Aufgabe der Erfindung ist es, die eingangs genannte Kommunikationseinrichtung für Fahrzeuge dahingehend zu verbessern, daß unabhängig von örtlichen Gegebenheiten eine sichere Kommunikationsverbindung gewährleistet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, daß Mobiltelefon für die Kommunikation mit einem Fahrzeug und die zugehörige Sende-/Empfangseinrichtung so auszugestalten, daß eine unmittelbare Verbindung über Funk besteht. Mit anderen Worten wird die Erfindung direkt hergestellt und nicht über ein Funktelefonnetz.

Gemäß der Erfindung ist beispielsweise die Niveauverstelleinrichtung eines Nutzfahrzeugs über das Mobiltelefon ansteuerbar und zwar "drahtlos", was den Bedienungskomfort, insbesondere die Fflexibilität wesentlich verbessert.

Im Unterschied zu dem o.g. anmelderinternen Stand der Technik, wird als Bediengerät für eine elektrische Niveauverstellung anstelle der bisher bekannten kabelgebundenen Fernbedienung ein handelsübliches Mobiltelefon verwendet.

Hierzu ist im Mobiltelefon ein Zusatzprogramm für einen "Bedienmodus" gespeichert, mit dem eine einfache, komfortable menügeführte Betätigung eines im Fahrzeug angeordneten Steuergerätes möglich ist.

Die bei modernen Mobiltelefonen vorhandenen grafikfähigen, hochauflösenden Displays erlauben eine komfortable Menügestaltung sowie eine einfache Menüführung. Aufgrund der hervorragenden Sende-/Empfangseigenschaften moderner Mobilfunkgeräte und ihrer großen Reichweite besitzen sie ideale Voraussetzungen für den Einsatz als universell nutzbare Funkfernbedienung.

Wenn ein Mobiltelefon zur Ansteuerung einer Fahrzeugniveauverstellvorrichtung verwendet wird, können in der "Fernbedienung", d.h. im Mobiltelefon verschiedene Funktionen gespeichert sein, wie z.B. vorab gespeicherte Verstellniveaus für die Beund Entladung des Fahrzeuges etc.

Durch eine Menüauswahl am Mobiltelefon kann zwischen einer Fernbedienung für das Zugfahrzeug und das Anhängerfahrzeug gewählt werden. Für einen Schutz vor einer "unberechtigten" Ansteuerung durch fremde Mobiltelefonbenutzer kann die bei Mobiltelefonen vorgesehene standardmäßige Übertragung der Mobilfunknummer zum fahrzeugseitigen Empfänger verwendet werden.

Des weiteren kann die im Fahrzeug vorgesehene Sende-/Empfangseinrichtung dazu benutzt werden, diverse Fahrzeugdaten per Funk über eine Relaisstation und ein Telefonnetz bzw. das Internet an beliebige Endgeräte, wie z.B. Telefone oder Computer, zu übertragen. Beispielsweise können Diagnosewerte oder sonstige Daten eines Steuergerätes einer elektronischen Luftfederung oder anderer Steuergeräte bzw. Sensoren übertragen werden.

Als Schnittstelle zwischen den verschiedenen Steuergeräten und dem Steuergerät für die elektronische Luftfederung bzw. dessen Sende-/Empfangsmodul kann eine Diagnoseleitung bzw. eine CAN-Schnittstelle verwendet werden.

Im folgenden wird die Erfindung anhand eines Ausführungsbeispieles im Zusammenhang mit der Zeichnung näher erläutert.

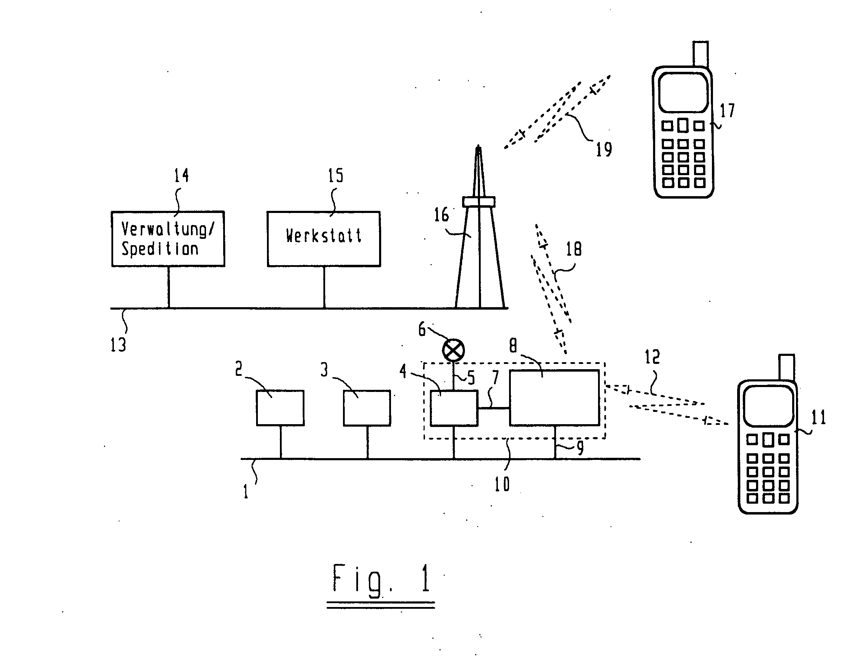

Die einzige Fig. 1 zeigt schematisch das Grundprinzip der Erfindung.

An einen Datenbus 1 (z.B. CAN-Bus) eines Fahrzeugs sind mehrere Fahrzeugsteuergeräte 2-4 eines Fahrzeuges angeschlossen. Das Steuergerät 4 kann beispielsweise zur Steuerung einer elektronischen Luftfederung bzw. zur Steuerung einer Niveauverstelleinrichtung des Fahrzeuges vorgesehen sein. Das Steuergerät 4 ist über eine elektrische Leitung 5 mit einer Warn- bzw. Kontrolllampe und über eine Leitung 7 mit einem Sende-/Empfangsmodul 8 verbunden, das über eine Leitung 9 ebenfalls an den CAN-Bus 1 angeschlossen ist.

Das Steuergerät 4 und das Sende-/Empfangsmodul 8 können in ein gemeinsames Elektronikgehäuse integriert sein, was hier schematisch durch den gestrichelten Block 10 angedeutet ist.

Das Sende-/Empfangsmodul 8 weist einen Sender und einen Empfänger auf, die einen Datenaustausch über Funk mit einem Mobiltelefon 11 ermöglichen, was hier durch den Pfeil 12 angedeutet ist.

Ferner ist ein Telefonfestnetz 13 vorgesehen, an das Telefone bzw. Computer einer Spedition 14 bzw. einer Reparaturwerkstatt 15 angeschlossen sein können. Ferner besteht eine Verbindung zwischen dem Telefonfestnetz 13 und einem Mobilfunknetz, was hier nur schematisch durch eine Relaisstation 16 angedeutet ist. Über die Relaisstation 16 ist ein Datenaustausch zwischen dem Sende-/Empfangsmodul 8 zu Festnetzgeräten oder anderen Mobilfunkgeräten 17 möglich, was durch die Pfeile 18 und 19 angedeutet ist.

Wesentliche "Sicherheitskriterien" beim Einsatz einer drahtlosen Fernbedienung im Fahrzeugbereich sind eine zuverlässige Datenverbindung, das Ausschließen von Störeinflüssen bzw. einer unberechtigten Bedienung durch fremde Mobiltelefonbenutzer sowie die Gefahr des Verlierens des Fernbedienungsteiles.

Mobiltelefone übertragen beim Rufaufbau standardmäßig die eigene Telefonnummer zum angerufenen Gerät. Dies ermöglicht es dem fahrzeugseitigen Empfänger 8 eine Anruferkennung bzw. eine Anrufselektion vorzunehmen. Insbesondere können ein oder mehrere Mobiltelefone 11 als "zulässige" Kommunikationsgeräte freigegeben bzw. vorkonfiguriert werden. Gleichzeitig kann eine ungewollte Nutzung Dritter zuverlässig ausgeschlossen werden.

Mobiltelefonbenutzer gehen üblicherweise sehr sorgfältig mit ihrem Mobiltelefon um, so daß bei einer Verwendung eines Mobiltelefons als Funkfernbedienung für ein Fahrzeug die Gefahr des Verlierens der Fernbedienung gering ist. Zusätzlich kann jedoch vorgesehen sein, daß das Sende-/Empfangsmodul 8 ständig überwacht, ob eine Funkverbindung zum Mobiltelefon 11 besteht. Wird das Mobiltelefon 11 außerhalb des Fahrzeuges liegengelassen, d.h. bricht die unmittelbare Funkverbindung 12 zwischen dem Mobiltelefon 11 und dem Sende-/Empfangsmodul 8 ab, so kann dies über die Warnlampe 6 angezeigt werden. Dies ist möglich, da das Sende-/Empfangsmodul 8 nicht über Relaisstationen 16, sondern direkt mit dem Mobiltelefon 11 kommuniziert.

Jedem der Steuergeräte 2-4 kann ein eigener PIN-Code zugeordnet sein. Bei der "Anmeldung" eines neuen Mobiltelefons 11 bei einem Steuergerät 2-4 des Fahrzeuges wird beim Aufruf der Fernbedienungssoftware im Display des Mobiltelefons 11 der PIN-Code des Steuergerätes 2-4 abgefragt und die Telefonnummer im Fahrzeug, d.h. im Steuergerät 2-4 bzw. im Sende-/Empfangsmodul 8 gespeichert. Anstelle eines PIN-Codes kann auch die Rufnummer des Sende-/Empfangsmoduls verwendet werden.

Während des ersten Anrufs des Mobiltelefons 11 besteht die Möglichkeit, die für den Datenaustausch erforderliche Betriebssoftware für das Mobiltelefon 11 vom Steuergerät 8 der elektronischen Luftfederung über das Sende-/Empfangsmodul 8 in das Mobiltelefon 11 herunterzuladen. Alternativ dazu kann vorgesehen sein, daß die Betriebssoftware über die Relaisstation 16 aus dem Internet heruntergeladen wird.

Die Rufnummer des Sende-/Empfangsmoduls 8 kann nach dem Herunterladen der Betriebssoftware im Mobiltelefon 11 gespeichert werden. Bei einem späteren Aufruf eines Menüs zur Ansteuerung der elektronischen Luftfederung über das Mobiltelefon 11 wird dann automatisch die Nummer des Sende-/Empfangsmoduls 8 gewählt und die Verbindung bis zum Verlassen des Menüs aufrechterhalten, wobei im Unterschied zu einem herkömmlichen Telefongespräch keine Telefongebühren anfallen. Durch die automatische Anwahl ist ein schneller Aufbau der Fernbedienungsfunktion über das Mobiltelefon 11 möglich.

Wahlweise können auch mehrere Mobiltelefone als "Fernbedienungsgeräte" für ein bestimmtes Fahrzeug vorkonfiguriert bzw. eingerichtet werden. Dabei kann vorgesehen sein, daß jeweils nur ein Mobiltelefon 11 und nicht mehrere gleichzeitig "aktiv" sein können, d.h. Daten mit dem Sende-/Empfangsmodul 8 austauschen können. Dies kann z.B. ein bereits beim Steuergerät 4 bzw. beim Sende-/Empfangsmodul 8 angemeldetes Mobiltelefon 11 sein, das nach dem Fahrzeugstart als erstes freigegebenes "Handy" das Menü für die elektronische Luftfederung aufruft.

Während des Aufrufens des Menüs für die elektronische Luftfederung kann z.B. in einem Eingangsmenü des Mobiltelefons 11 einmalig ein PIN-Code, das Kfz-Kennzeichen o.ä. abgefragt werden, um eine irrtümliche Bedienung eines "falschen" Fahrzeuges zu verhindern. Damit kann der Gefahr einer Fehlbedienung bei einem häufigen Fahrzeugwechsel vorgebeugt werden. Die sich hieran anschließende Freischaltung des Mobiltelefons wird für die Dauer des Fahrzeugbetriebs, d.h. bis zum Abschalten der Zündung aufrechterhalten und bewirkt gleichzeitig eine Sperrung aller anderen angemeldeten Mobilfunkrufnummern. Ein Mobiltelefon 11 kann somit zur Ansteuerung mehrerer Fahrzeuge genutzt werden. Gleichzeitig ist jedoch sichergestellt, daß immer nur ein Mobiltelefon 11 pro Sende-/Empfangsmodul 8 zugelassen ist.

Die Möglichkeit der Verwendung eines fahrzeugspezifischen PIN-Codes bzw. die Verwendung der Rufnummer des Sende-/Empfangsmoduls 8 als Geheimzahl sowie die Übertragung der Telefonnummer des Mobiltelefons 11 beim Verbindungsaufbau erlauben eine Vielzahl kunden- und sicherheitsspezifischer Anwendungen.

Wie bereits erläutert, kann das Sende-/Empfangsmodul 8 in ein Steuergerät 4 integriert sein. Um eine gute Ein-/Abstrahleigenschaft, d.h. eine gute Signalübertragung zu erreichen, sollte das Sende-/Empfangsmodul 8 bzw. das Steuergerät 4 in einem separaten Gehäuse an einer Stelle des CAN-Busses 1 angeordnet sein, an der ein guter Empfang vorhanden ist. Über das Display des Mobiltelefons 11 kann der Betriebszustand, d.h. Störungen bzw. Fehler des Steuergerätes 4 überwacht und angezeigt werden. Beispielsweise kann ein Nutzfahrzeug beim Einfahren in ein Speditionsgelände die gefahrene Kilometerleistung, einen Systemfehler bzw. anstehende Wartungsinformationen drahtlos einer zuständigen Werkstatt 15 bzw. der Speditionsverwaltung 14 zusammen mit diversen anderen Fahrzeugdaten, wie z.B. Fahrzeughalter, Mieter, Fracht etc., mitteilen.

Das Sende-/Empfangsmodul 8 kann neben der direkten Kommunikation 12 mit einem Mobilitelefon 11 auch Verbindungen 18 über das Festnetz 13 ermöglichen. Ein Mobiltelefon 11 kann somit auch zur Fernabfrage von Fehlern oder sonstigen Daten von jedem beliebigen Standort aus verwendet werden. Ferner können weitere Aufgaben durchgeführt werden, wie z.B. ein Service-Notruf, Datenverkehr zur Logistiksteuerung zwischen der Spedition 14 und dem Fahrzeug, Fehlerdiagnoseüberwachung, Überwachung von Reparatur- und Service-Terminen sowie Updates von Software der Steuergeräte 2-4 bzw. des Sende-/Empfangsmoduls 8. Somit können Änderungen zentral, beispielsweise vom Steuergerätehersteller, durchgeführt und teure Rückrufaktionen vermieden werden.

Zusammenfassend werden mit der Erfindung primär folgende Vorteile erreicht:
- Kostengünstige Systemlösung, da kein zusätzliches Funkfernsteuergerät notwendig ist und Mobiltelefone preiswert sind.
- Mit einem einzigen Mobiltelefon können durch Umschalten sowohl das Zugfahrzeug als auch das Anhängerfahrzeug angesteuert werden.
- Das Sende-/Empfangsmodul 8 ermöglicht sowohl eine Verbindung zum Telefonfestnetz 13 sowie zu verschiedenen Mobilfunknetzen.
- Hohe Zuverlässigkeit, da Mobilfunksysteme bereits langjährig erprobt sind.
- Hohe Reichweite der Funkverbindung, da die Sende-/Empfangsleistung von Mobiltelefonen für mehrere Kilometer bis zur nächsten Relaisstation ausgelegt ist.
- Hohe Sicherheit gegen Störeinflüsse bzw. Fremdmanipulation durch Mitsenden und Kontrollieren der Telefonnummer des Mobiltelefons durch das fahrzeugseitige Steuergerät.
- Der Bediener kann sein eigenes Mobiltelefon verwenden; somit besteht eine geringe Gefahr, daß die "Fernbedienung" verloren bzw. vergessen wird.
- Wenn die Funkverbindung zum Fahrzeug abbricht, wird ein Warnsignal erzeugt.
- Die Verbindung zum Fahrzeug wird durch einfaches Herunterladen einer Betriebssoftware in das Mobiltelefon hergestellt.
- Ein Update von Fahrzeugsoftware, beispielsweise von Software einzelner Steuergeräte, ist über die Mobilfunkverbindung möglich, wodurch Fahrzeugrückrufe vermieden werden können.

## Patentansprüche

1. Kommunikationseinrichtung für Fahrzeuge mit einer Sende-/Empfangseinrichtung, die im Fahrzeug angeordnet ist, und einem Mobiltelefon, zum Datenaustausch mit der Sende-/Empfangseinrichtung, wobei über eine zwischen dem Mobiltelefon (11) und der Sende-/Empfangseinrichtung (8) bestehende Kommunikationsverbindung ein im Fahrzeug angeordnetes Steuergerät (2-5) ansteuerbar ist, zwischen dem Mobiltelefon (11) und der Sende-/Empfangseinrichtung eine unmittelbare Verbindung (12) über Funk besteht und ein mechanischer Aktuator vorgesehen ist, der von dem Steuergerät (2-5) angesteuert ist, **dadurch gekennzeichnet, dass** der Aktuator eine Niveauverstelleinrichtung einer elektronisch gesteuerten Luftfedervorrichtung ist.

2. Kommunikationseinrichtung nach Anspruch 1, **dadurch gekennzeichnet, dass** die Sende-/Empfangseinrichtung (8) ständig überwacht, ob eine Funkverbindung (12) zum Mobiltelefon (11) besteht, wobei bei einem Abreissen der Funkverbindung (12) ein Meldesignal (6) im Fahrzeug erzeugt wird.

3. Kommunikationseinrichtung nach einem der Ansprüche 1 bis 2 **dadurch gekennzeichnet, dass** die Sende-/Empfangseinrichtung (8) über einen Datenbus (1), insbesondere einen CAN-Bus mit einem Steuergerät (2-5) des Aktuators verbunden ist.

4. Kommunikationseinrichtung nach einem der Ansprüche 1 bis 3 **dadurch gekennzeichnet, dass** die Sende-/Empfangseinrichtung (8) ein Aktuatorsteuergerät (2-5) in ein gemeinsames Gehäuse integriert ist.

5. Kommunikationseinrichtung nach einem der Ansprüche 1 bis 4 **dadurch gekennzeichnet, dass** dem Aktuatorsteuergerät (2-5) ein individueller Steuergerätecode zugeordnet ist, welcher bei einer Einrichtung einer Kommunikationsverbindung (12) zwischen dem Mobiltelefon (11) und der Sende-/Empfangseinrichtung (8) mit einem dem Mobiltelefon (11) individuell zugeordneten Mobiltelefoncode vom Mobiltelefon (11) an die Sende-/Empfangseinrichtung (8) zu übertragen ist.

6. Kommunikationseinrichtung nach Anspruch 5, **dadurch gekennzeichnet, dass** die Sende-/Empfangseinrichtung (8) eine Überwachungseinrichtung zur Überprüfung der Kommunikationsberechtigung des Mobiltelefons (11) aufweist, in welcher der Mobiltelefoncode gespeichert ist, wobei vor einer Ansteuerung des Aktuators ein Mobiltelefoncode vom Mobiltelefon (11) an die Sende-/Empfangseinrichtung (8) zu senden ist, welcher von der Überwachungseinrichtung mit dem gespeicherten Mobiltelefoncode verglichen wird.

7. Kommunikationseinrichtung nach Anspruch 6, **dadurch gekennzeichnet, dass** der gespeicherte Mobiltelefoncode eine Telefonnummer ist.

8. Kommunikationseinrichtung nach einem der Ansprüche 1 bis 7, **dadurch gekennzeichnet, dass** in einer Speichereinrichtung des Fahrzeuges eine Kommunikationssoftware für das Mobiltelefon (11) gespeichert ist, die beim Einrichten bzw. Konfigurieren der Kommunikationsverbindung (12) zwischen der Sende-/Empfangseinrichtung (8) und dem Mobiltelefon (11) an das Mobiltelefon (11) übertragen wird.

9. Kommunikationseinrichtung nach einem der Ansprüche 1 bis 8, **dadurch gekennzeichnet, dass** in dem Mobiltelefon (11) ein Steuergerätecode eines Aktuatorsteuergerätes (2-5) gespeichert ist, der beim Aufrufen eines Kommunikationsmenüs im Mobiltelefon (11) an die Sende-/Empfangseinrichtung (8) gesendet wird.

10. Kommunikationseinrichtung nach einem der Ansprüche 1 bis 9, **dadurch gekennzeichnet, dass** zwischen der Sende-/Empfangseinrichtung (8) und mehreren Mobiltelefonen (11) eine Kommunikationsverbindung (12) eingerichtet ist, wobei stets nur eine dieser Kommunikationsverbindungen (12) freigeschaltet ist.

11. Kommunikationseinrichtung nach Anspruch 10, **dadurch gekennzeichnet, dass** für eine Freischaltung einer Kommunikationsverbindung (12) ein fahrzeugspezifischer Code vom Mobiltelefon (11) an die erste Sende-- /Empfangseinrichtung (8) zu übertagen ist, und dass bei einer Freischaltung einer Kommunikationsverbindung (12) alle anderen Kommunikationsverbindungen gesperrt werden.

## Claims

1. Communication device for vehicles with a transceiver which is arranged in the vehicle and with a mobile phone for data exchange with the transceiver, wherein a control unit (2 - 5) arranged in the vehicle can be controlled via a communication connection existing between the mobile phone (11) and the transceiver (8), a direct connection (12) via radio exists between the mobile phone (11) and the transceiver, and a mechanical actuator is provided which is controlled by the control unit (2 - 5), **characterised in that** the actuator is a level adjusting means of an electronically controlled air suspension device.

2. Communication device according to claim 1, **characterised in that** the transceiver (8) constantly monitors whether a radio connection (12) with the mobile phone (11) exists, whereby a report signal (6) is generated in the vehicle in the event of breaking-off of the radio connection (12).

3. Communication device according to one of the claims 1 to 2, **characterised in that** the transceiver (8) is connected to a control unit (2 - 5) of the actuator via a data bus (1), in particular a CAN bus.

4. Communication device according to one of the claims 1 to 3, **characterised in that** the transceiver (8) and an actuator control unit (2 - 5) are integrated into a shared housing.

5. Communication device according to one of the claims 1 to 4, **characterised in that** an individual control unit code is assigned to the actuator control unit (2 - 5) and is to be transmitted by the mobile phone (11) to the transceiver (8), in the case of establishing of a communication connection (12) between the mobile phone (11) and the transceiver (8), with a mobile phone code individually assigned to the mobile phone (11).

6. Communication device according to claim 5, **characterised in that** the transceiver (8) has a monitoring device for checking the communication right of the mobile phone (11), in which the mobile phone code is stored, whereby prior to a control of the actuator a mobile phone code is to be transmitted by the mobile phone (11) to the transceiver (8) and is compared by the monitoring device with the stored mobile phone code.

7. Communication device according to claim 6, **characterised in that** the stored mobile phone code is a telephone number.

8. Communication device according to one of the claims 1 to 7, **characterised in that** communication software for the mobile phone (11) is stored in a storage device of the vehicle and is transmitted to the mobile phone (11) upon establishment and configuration of the communication connection (12) between the transceiver (8) and the mobile phone (11).

9. Communication device according to one of the claims 1 to 8, **characterised in that** a control unit code of an actuator control unit (2 - 5) is stored in the mobile phone (11) and is transmitted to the transceiver (8) upon call-up of a communication menu in the mobile phone (11).

10. Communication device according to one of the claims 1 to 9, **characterised in that** a communication connection (12) is established between the transceiver (8) and a plurality of mobile phones (11), whereby only one of these communication connections (12) is enabled at one time.

11. Communication device according to claim 10, **characterised in that** a vehicle-specific code is to be transmitted by the mobile phone (11) to the first transceiver (8) to enable a communication connection (12) and, upon enabling of a communication connection (12), all other communication connections are blocked.

## Revendications

1. Dispositif de communication pour des véhicules ayant un dispositif d'émission/réception, qui est disposé dans le véhicule, et un téléphone mobile, pour l'échange de données avec le dispositif d'émission/réception, dans lequel un appareil (2 à 5) de commande, disposé dans le véhicule, peut être commandé par une liaison de communication existante entre le téléphone (11) mobile et le dispositif (8) d'émission/réception, il existe une liaison (12) directe par radio entre le téléphone (11) mobile et le dispositif d'émission/réception et il est prévu un actionneur mécanique, qui est commandé par l'appareil (2 à 5) de commande, **caractérisé en ce que** l'actionneur est un dispositif de réglage d'assiette d'un dispositif pneumatique de suspension commandé électroniquement.

2. Dispositif de communication suivant la revendication 1, **caractérisé en ce que** le dispositif (8) d'émission/réception contrôle en permanence s'il existe une liaison (12) radio vers le téléphone (11) mobile, un signal (6) d'avertissement étant produit dans le véhicule si la liaison (12) radio est rompue.

3. Dispositif de communication suivant l'une des revendications 1 à 2, **caractérisé en ce que** le dispositif (8) d'émission/réception est relié à un appareil (2 à 5) de commande de l'actionneur par un bus (1) de données, notamment par un bus CAN.

4. Dispositif de communication suivant l'une des revendications 1 à 3, **caractérisé en ce que** le dispositif (8) d'émission/réception est intégré avec l'appareil (2 à 5) de commande d'actionneur dans un boîtier commun.

5. Dispositif de communication suivant l'une des revendications 1 à 4, **caractérisé en ce qu'**à l'appareil (2 à 5) de commande de l'actionneur est associé un code individuel d'appareil de commande, qui, lors de l'établissement d'une liaison (12) de communication entre le téléphone (11) mobile et le dispositif (8) d'émission/réception, peut être transmis du téléphone (11) mobile au dispositif (8) d'émission/réception par un code de téléphone mobile associé individuellement au téléphone (11) mobile.

6. Dispositif de communication suivant la revendication 5, **caractérisé en ce que** le dispositif (8) d'émission/réception a un dispositif de contrôle pour contrôler l'habilitation de communication du téléphone (11) mobile, dispositif de contrôle dans lequel le code du téléphone mobile est mémorisé, dans lequel, avant une commande de l'actionneur, un code du téléphone mobile doit être envoyé du téléphone (11) mobile au dispositif (8) d'émission/réception, code qui est comparé par le dispositif de contrôle au code du téléphone mobile qui est mémorisé.

7. Dispositif de communication suivant la revendication 6, **caractérisé en ce que** le code du téléphone mobile qui est mémorisé est un numéro de téléphone.

8. Dispositif de communication suivant l'une des revendications 1 à 7, **caractérisé en ce qu'**il est mémorisé dans un dispositif de mémorisation du véhicule un logiciel de communication pour le téléphone (11) mobile, logiciel qui, lors de l'établissement ou de la configuration de la liaison (12) de communication entre le dispositif (8) d'émission/réception et le téléphone (11) mobile, est transmis au téléphone (11) mobile.

9. Dispositif de communication suivant l'une des revendications 1 à 8, **caractérisé en ce qu'**il est mémorisé, dans le téléphone (11) mobile, un code d'appareil de commande d'un appareil (2 à 5) de commande d'actionneur, code qui, lorsqu'un menu de communication est appelé dans le téléphone (11) mobile, est envoyé au dispositif (8) d'émission/réception.

10. Dispositif de communication suivant l'une des revendications 1 à 9, **caractérisé en ce qu'**il est établi, entre le dispositif (8) d'émission/réception et plusieurs téléphones (11) mobiles, une liaison (12) de communication, seulement toujours l'une de ces liaisons (12) de communication étant libérée.

11. Dispositif de communication suivant la revendication 10, **caractérisé en ce que**, pour libérer une liaison (12) de communication, un code spécifique au véhicule doit être transmis du téléphone (11) mobile au premier dispositif (8) d'émission/réception et **en ce que**, s'il y a libération d'une liaison (12) de communication, toutes les autres liaisons de communication sont bloquées.
